# EUROPEAN PATENT APPLICATION

(11) **EP 4 008 219 A1**
(43) Date of publication of application: **08.06.2022**
(21) Application number: 21188074.5
(22) Date of filing: 27.07.2021
(51) Int. Cl.: A47C 7/42, B60N 2/66

(54) **BACK SUPPORT DEVICE**

(30) Priority: 27.07.2020 CH 9342020
(71) Applicant: Ak, Vedat, 4058 Basel (CH)
(72) Inventor: Ak, Vedat, 4058 Basel (CH)
(74) Representative: Vossius & Partner Patentanwälte Rechtsanwälte mbB

(57) **Abstract**

The present invention relates to a back support device (100). The device (100) of the present invention is configured for attachment to the backrest of a seat, and comprises a framework (104) configured for attachment to the backrest of a seat; and a vertical support cushion (106). The vertical support cushion (106) is attached to the framework (104) and comprises one or more support element(s) (110) substantially parallel to the vertical dimension of the backrest of the seat. Said support element(s) (110) have a horizontal cross-section of substantially an elliptical segment. Alternatively, the vertical support cushion (106) is of substantially elliptic cylinder shape and is substantially parallel to the vertical dimension of the backrest of the car seat. The device of the present invention is used to support the body configuration while seated. In particular, it is used to support not only the lumbar region of the back of a user, but also the thoracic region.

## Description

### Field of invention

The present invention relates to a back support device, the device being configured for attachment to the backrest of a seat. The device of the present invention is used to support the body configuration while seated. In particular, it is used to support not only the lumbar region of the back of a user, but also the thoracic region.

### Background of the invention

Daily activities such as driving a car or working at a computer can cause or exacerbate an improper postural position. Presently available car seats, office chairs, and other forms of seating may sometimes have ergonomic design elements, but can nevertheless continue to cause unnatural posture that leads to compression of the thoracic outlet and shoulder regions. As an example, bucket car seats may cause an unnatural slouching posture. A prolonged slouching position while seated (such as, but not limited to, when typing at a desk or driving for extended periods of time) changes the length and flexibility of the stabilizing muscles (e.g., rhomboids, latissimus dorsi, trapezius, etc), of the upper quadrant (i.e., neck, upper back, and shoulder region). Continually maintaining such unnatural posture can cause weakness in the stabilizing muscles and unnecessary contraction in the non-stabilizing muscles (e.g., scalenes, pectoralis minor/major, subscapularis, etc). and result in abnormal shoulder curvature and other non-natural positions, nerve and vascular compression and muscle fatigue-ultimately manifested as pain, numbness, and tingling in the user's extremities.

Ergonomic office chairs are an example of a partial solution. Though they may support the lumbar region, they fail to provide the upper quadrant support needed to help prevent non-stabilizing muscles from contracting. Thus, in the case of working at a computer, the situation can be exacerbated by typing on a keyboard, causing increased worker fatigue. Lumbar supports for use in a vehicle also fail to provide upper quadrant support. In the case of driving, the situation is further exacerbated by gripping a steering wheel, causing further driver fatigue.

Previous support devices and/or cushions have limited the design to support lumbar or sacral regions only, and/or not provided enough adjustability or customization to remedy underlying cause of the situation. Previous devices and/or cushions that do offer support to the thoracic and/or cervical spine do so by placing a cushion or support between the scapulae along the thoracic spine or with supports that are positioned horizontally across sections of the back. When a user leans against them, these designs serve to force the spine or back to conform to the shape of the support. While some may be portable or modular in design, or supporting part or all of the spinal region, presently available seat/backrests supports are still lacking the design and functionality needed to appropriately address the user's cause of distress. The designs of previously existing support devices need improvement in order to properly support the user.

US6299248 discloses a specific portable posture system for mounting on a chair.

US2008150337 discloses a specific chair comprising a generally vertically extending elongated spine support, as well as it discloses a portable back support.

US2005253434 concerns a certain fully adjustable back/lumbar support device.

US4097087 discloses a specific back assembly for a chair, therein a transversal lumbar support cushion and certain means for mounting thereof to a back portion, and a centrally disposed longitudinal spine support cushion fixedly mounted on said back portion.

CN204775255U describes certain portable train cushion for a seat.

WO2013180089 discloses a specific seat device installed in a moving body, having a seat cushion and a seat back.

WO2016144302 describes certain thoracic engagement apparatus.

JP2003189976 describes a specific backrest plate for a seat, having a function of correcting posture.

US4864668 discloses certain portable back support adapted for use by a sitting user.

US2013226053 describes a specific postural support device and methods of use thereof.

EP0018423 discloses a specific portable folding orthopedic seat unit.

DE20013312U discloses a certain back support device, with a support arch arranged in the lumbar and thoracic vertebra area of a piece of seating or reclining furniture.

### Summary of the invention

It is an object of the present invention to provide a back support device that can be mounted to a backrest of a seat and support not only the lumbar region of the back, but also the thoracic region.

The present invention is summarized in the following aspects.

In a first aspect, the present invention relates to a back support device, the device comprising a framework configured for attachment to the backrest of a seat; and a vertical support cushion; wherein the vertical support cushion is attached to the framework; wherein the vertical support cushion comprises one or more support element(s) substantially parallel to the vertical dimension of the backrest of the seat, said support element(s) having a horizontal cross-section of substantially an elliptic segment; wherein convex sides of the said support elements are facing away from the backrest of the seat; and if there is more than one support element, wherein each support element is attached to one or two of neighboring support elements.

A particular aspect of the present invention relates to the back support device of the invention, wherein the vertical support cushion is filled with silicon and/or liquid material.

In a further particular aspect, the present invention relates to the back support device of the invention, wherein the vertical support cushion is covered with fabric, leather and/or silk.

In again a further aspect, the present invention relates to the back support device of the invention, wherein the vertical support cushion is between about 30 cm and 60 cm long along its vertical dimension.

A further particular aspect of the present invention relates to the back support device of the invention, wherein the height of the elliptical segment horizontal cross-section of each support element is between about 5 mm and 3 cm.

In one particular aspect, the present invention relates to the back support device of the invention, wherein the vertical support cushion comprises one support element.

In a further particular aspect, the present invention relates to the back support device of the invention, wherein the vertical support cushion comprises two support elements.

In a further aspect, the present invention relates to the back support device of the invention, wherein the length of the chord of the elliptical segment horizontal cross-section of each support element is between about 6 cm and 14 cm.

In again a further aspect, the present invention relates to the back support device of the invention, wherein the vertical support cushion comprises three support elements: central support element surrounded by two flanking support elements.

A particular aspect of the back support device of the present invention relates to an embodiment, wherein the length of the chord of the elliptical segment horizontal cross-section of the central support element is between about 6 cm and 12 cm, and wherein the length of the chord of the elliptical segment horizontal cross-section of flanking support elements is between about 2 cm and 6 cm.

In an alternative aspect, the back support device of the present invention relates to an embodiment, wherein the length of the chord of the elliptical segment cross-section of the central support element is between about 2 cm and 6 cm, and wherein the length of the chord of the elliptical segment horizontal cross-section of the flanking support elements is between about 6 cm and 12 cm.

In another aspect, the present invention relates to a back support device of the invention, the device comprising a framework configured for attachment to the backrest of a car seat; and a vertical support cushion; wherein the vertical support cushion is attached to the framework; wherein the vertical support cushion is of substantially elliptic cylinder shape and is substantially parallel to the vertical dimension of the backrest of the car seat; and wherein the semi-major axis of the elliptic cross-section of the vertical support cushion is substantially aligned with the horizontal dimension of the backrest of the car seat.

A particular aspect of the present invention relates to the back support device of the invention, wherein the vertical support cushion is filled with silicon and/or liquid material.

In a further particular aspect, the present invention relates to the back support device of the invention, wherein the vertical support cushion is covered with fabric, leather and/or silk.

In again a further aspect, the present invention relates to the back support device of the invention, wherein the vertical support cushion is between about 30 cm and 60 cm long along its vertical dimension.

In a particular aspect, the back support device of the present invention relates to an embodiment, wherein the semi-major axis of the elliptic horizontal cross-section of the vertical support cushion is between about 3 cm and 7 cm.

In a further aspect, the back support device of the present invention relates to an embodiment, wherein the semi-minor axis of the elliptic horizontal cross-section of the vertical support cushion is between about 5 mm and 3 cm.

### Detailed description of the invention

It is to be understood that all possible combinations of described features are also envisaged as falling within the scope of the invention.

The back support device of the present invention comprises a framework configured for attachment to the backrest of a seat and a vertical support cushion. In certain embodiments, the vertical support cushion is attached to said framework. In further embodiments, the vertical support cushion is attachable to said framework and can be detached if needed, for example for cleaning and/or maintenance. In certain embodiments, depending on the user, different user-dependent vertical support cushions can be attached to one framework. The framework may be configured for attachment to the backrest of a seat. The framework may for example be attached to the backrest of a car seat, or of an office seat. The framework of the device of the present invention is not particularly limited, and is to be understood as means of attachment (and/or reattachment) of the vertical support cushion to the backrest of a seat, as defined herein. A non-limiting example of the framework is a belt made of fabric that can be fixed on the backrest of a seat, with Velcro allowing attachment of a vertical support cushion. The position of the framework within the backrest of a seat, as well as the vertical support cushion within the framework, can be adjusted according to the needs of the user.

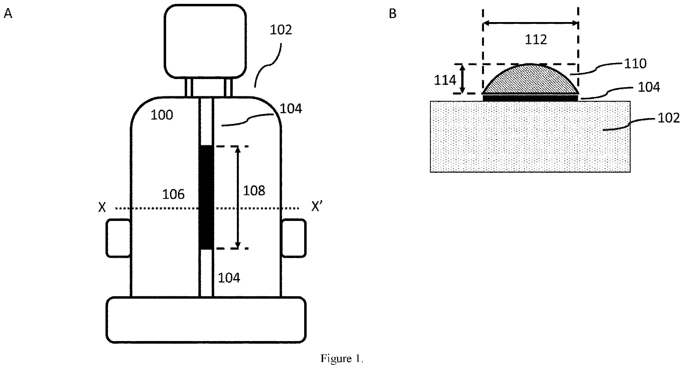

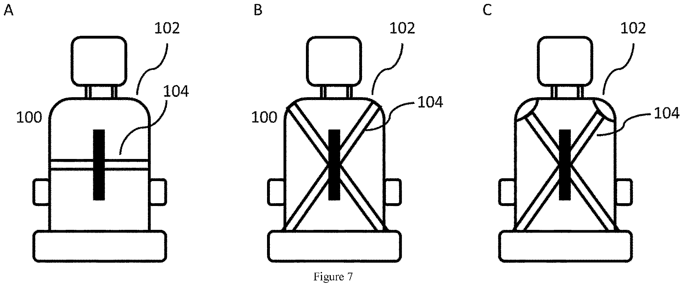

Preferably as understood herein, the framework (104) can take different forms, depending on how it is attached to the backrest of the car seat, which are not meant to be construed as limiting. Any form of framework conceivable to the skilled person is encompassed within the scope of the present invention. In certain embodiments, the framework can be substantially attached as in Figures 1 to 4. In certain embodiments, the framework can be substantially configured as shown in Figure 7 A-C. As shown in Figure 7A, the framework can take a form of a belt that is attached horizontally around the backrest of a seat. As shown in Figure 7B and C, the framework can take a form of two belts, the first belt attached around a first diagonal of the backrest of the car seat, the second belt attached around a second diagonal of the backrest of the car seat, wherein the vertical support cushion is configured to be attached (or reattached), for example by velcros) to both belts to the point where the two belts cross each other. In certain embodiments, the two belts may be attached to each other at the point of attachment to the vertical support cushion. As shown in Figure 7C, the belts may include additional elements configured to be attached to the corners of the backrest of the car seat, configured to improve the attachment of the framework to the backrest of the car seat.

The attachment of the vertical support cushion to the framework is to be performed in such a way as to allow for support of a body configuration in a sitting position, by controlling the position and configuration of the spinal cord. In certain embodiments, the vertical support cushion is attached to the framework, and effectively to the seat, to contact preferably thoracic fragment of the spinal cord. In another embodiment of the present invention, the vertical support cushion is attached to the framework (and to the seat) so that it contacts thoracic and lumbar fragment of the spinal cord.

Any material capable of supporting the body configuration is suitable for manufacturing the vertical support cushion. It is known to person skilled in the art that upon contact in the body, a certain compression of the vertical support cushion material is acceptable. It is understood that upon contact with the body of the user the volume of the vertical support cushion may be compressed by not more than 50%, preferably by not more than 40%, more preferably by not more than 30%, even more preferably by not more than 20%. It is further known to the skilled person that compression of such cushion material depend on applied pressure, herein pressure applied by contact with the body. This property is qualitatively described as softness of the material, and can be quantitatively described using the indentation load deflection. In certain embodiments, the vertical support cushion is made of high-density foam, for example urethane or latex foam with an indention load deflection (ILD) rating of 45 to 55 (the foam requires 45 to 55 pounds of pressure to condense the foam to 25 percent of its thickness).

In certain embodiments of the present invention the shape of the vertical support cushion is predefined and maintained by its cover, and the vertical support cushion is made of a material that is elastic, but substantially not compressible. Non-limiting examples of such material include rubber and silicone. In certain embodiments of the present invention, the vertical support cushion can be filled in part or in full with a liquid, for example with glycerin. In another embodiment, the vertical support cushion may be filled with beads of the larges dimension preferably smaller than 0.01 m. Preferably, in the device of the present invention, the vertical support cushion is filled with silicon and/or liquid material.

It is to be understood that any considerations of the shape of the elements of the present invention, in particular of vertical support cushion and/or the support element(s), are to be construed as under the conditions wherein no external force other than gravity is applied thereto. In particular, the shape of the vertical support cushion and/or of the support elements as discussed here is the shape that is not deformed and/or compressed when supporting the body configuration.

Any material can be used to manufacture a cover of the vertical support cushion. Preferably, the cover material can generate enough friction in contact with a body so that support the body configuration and be comfortable to sit in contact therewith. Preferably, the vertical support cushion of the present invention is made of fabric, leather and/or silk. In other words, the vertical support cushion of the present invention is covered with fabric, leather and/or silk.

Figure 1A presents an exemplary embodiment of the present invention. Therein, a back support device (100) is attached to the back of a car seat (102) by using a framework (104). The back of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion comprises one support element (110) that is substantially parallel to the vertical dimension of the backrest of the seat (102). The vertical support cushion is between about 30 cm and 60 cm long along its vertical dimension (108).

Figure 1B presents a horizontal cross section of the back support device (100) of Figure 1A, in particular of the vertical support cushion (106) and the framework (104) as mounted to the back of a car seat (102), alongside the plane substantially perpendicular to the vertical dimension of the car seat, and represented by X - X' axis in Figure 1A. The plane defined by X - X' axis in Figure 1A is substantially perpendicular to the vertical dimension of the backrest of the seat (102) and may intersect the vertical support cushion (106) anywhere alongside its vertical dimension (108). It is thus herewith understood that the horizontal cross-section of the vertical support cushion (106) is substantially identical alongside its vertical dimension (108).

In this embodiment, the support element (110) has a horizontal cross-section of substantially an elliptic segment, as shown in Figure 1B. The support element (110) is attached to the framework in such a way that convex sides of the said support elements are facing away from the backrest of the seat, and the flat side of the said support element (110) is facing the framework.

In this embodiment, the height of the elliptical segment horizontal cross-section (114) of the support element (110) is between about 5 mm and 3 cm. Further in this embodiment, the length of the chord of the elliptical segment horizontal cross-section (112) of the support element (110) is between about 6 cm and 14 cm. In the device of the present invention, the elliptical segment horizontal cross-section of the support element (100) has preferably a circular segment shape. However, this is not to be construed as limiting and any cross-section of the support element (110) that is substantially flat on the side facing the framework, and that is curvilinear and convex on the side facing away from the back of a seat, falls within the scope of the present invention. In such an embodiment, height of the elliptical segment horizontal cross-section (114) of the support element (110) can be more generally referred to as the maximum length of the dimension of the horizontal cross section of the support element within the plane substantially perpendicular to the vertical dimension of the car seat, and represented by X - X' axis in Figure 1A, alongside the axis perpendicular to the backrest of a car seat (102). Further in such an embodiment, the chord of the elliptical segment horizontal cross-section (112) of the support element (110) can be more generally referred to as the maximum length of the dimension of the horizontal cross section of the support element within the plane substantially perpendicular to the vertical dimension of the car seat, and represented by X - X' axis in Figure 1A, alongside the axis parallel to the backrest of a car seat (102).

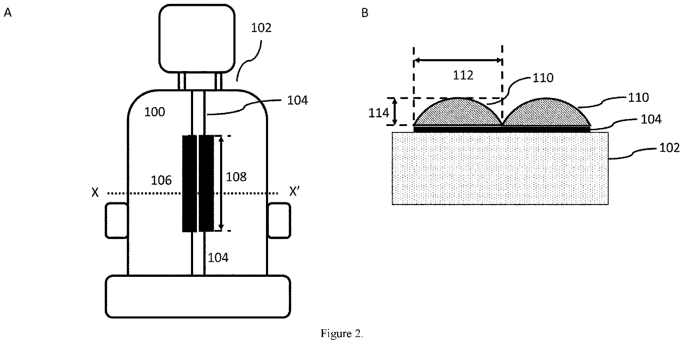

Figure 2A represents a further exemplary embodiment of the present invention. Therein, a back support device (100) is attached to the back of a car seat (102) by using a framework (104). The back of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion comprises two support elements (110), as shown in Figure 2B, that are substantially parallel to the vertical dimension of the backrest of the seat (102). The vertical support cushion is between about 30 cm and 60 cm long along its vertical dimension (108).

Figure 2B presents a horizontal cross section of the back support device (100) of Figure 2A, in particular of the vertical support cushion (106) and the framework (104) as mounted to the back of a car seat (102), alongside the plane substantially perpendicular to the vertical dimension of the car seat, and represented by X - X' axis in Figure 2A. The plane defined by X - X' axis in Figure 2A is substantially perpendicular to the vertical dimension of the backrest of the seat (102) and may intersect the vertical support cushion (106) anywhere alongside its vertical dimension (108). It is thus herewith understood that the horizontal cross-section of the vertical support cushion (106) is substantially identical alongside its vertical dimension (108).

In this embodiment, each support element (110) has a horizontal cross-section of substantially an elliptic segment, as shown in Figure 2B. The support elements (110) are attached to the framework in such a way that convex sides of the said support elements are facing away from the backrest of the seat, and the flat side of the said support element (110) is facing the framework. The two support elements (110) are attached to each other, preferably alongside the lines defined by the endpoints of the arcs of the elliptical segments and parallel to the vertical dimension of the car seat.

In this embodiment, the height of each elliptical segment horizontal cross-section (114) of the support element (110) is between about 5 mm and 3 cm. Further in this embodiment, the length of the chord of each elliptical segment horizontal cross-section (112) of the support element (110) is between about 6 cm and 14 cm. In the device of the present invention, preferably the elliptical segment horizontal cross-section of the support element (110) has a circular segment shape. However, this is not to be construed as limiting and any cross-section of the support element (110) that is substantially flat on the side facing the framework, and that is curvilinear and convex on the side facing away from the back of a seat, falls within the scope of the present invention. In such an embodiment, height of the elliptical segment horizontal cross-section (114) of the support element (110) can be more generally referred to as the maximum length of the dimension of the horizontal cross section of the support element within the plane substantially perpendicular to the vertical dimension of the car seat, and represented by X - X' axis in Figure 2A, alongside the axis perpendicular to the backrest of a car seat (102). Further in such an embodiment, the chord of the elliptical segment horizontal cross-section (112) of the support element (110) can be more generally referred to as the maximum length of the dimension of the horizontal cross section of the support element (110) within the plane substantially perpendicular to the vertical dimension of the car seat, and represented by X - X' axis in Figure 2A, alongside the axis parallel to the backrest of a car seat (102). In this embodiment, the two support elements (110) are attached to each other, preferably alongside lines parallel to the vertical dimension of the car seat.

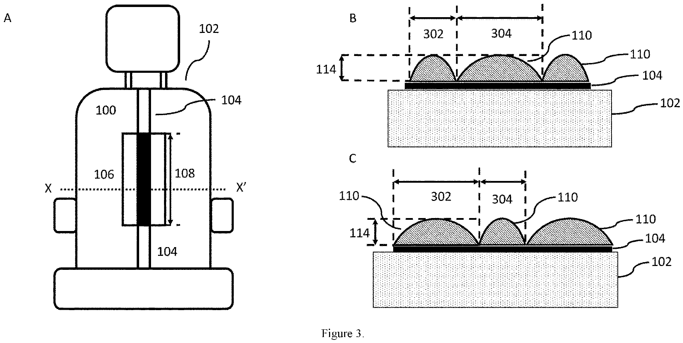

Figure 3A represents a further exemplary embodiment of the present invention. Therein, a back support device (100) is attached to the back of a car seat (102) by using a framework (104). The back of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion comprises three support elements: central support element (306) surrounded by two flanking support elements (308), as shown in Figure 3B or 3C, that are substantially parallel to the vertical dimension of the backrest of the seat (102). The vertical support cushion is between about 30 cm and 60 cm long along its vertical dimension (108).

Figures 3B and 3C present different variants of a horizontal cross section of the back support device (100) of Figure 3A, in particular of the vertical support cushion (106) and the framework (104) as mounted to the back of a car seat (102), alongside the plane substantially perpendicular to the vertical dimension of the car seat, and represented by X - X' axis in Figure 3A. The plane defined by X - X' axis in Figure 3A is substantially perpendicular to the vertical dimension of the backrest of the seat (102) and may intersect the vertical support cushion (106) anywhere alongside its vertical dimension (108). It is thus herewith understood that the horizontal cross-section of the vertical support cushion (106) is substantially identical alongside its vertical dimension (108).

In certain embodiments, each support element (110) has a horizontal cross-section of substantially an elliptic segment, as shown in Figures 3B and 3C. The support elements (306, 308) are attached to the framework (104) in such a way that convex sides of the said support elements are facing away from the backrest of the seat, and the flat side of the said support elements (306, 308) is facing the framework. The two flanking support elements (308) are attached to the central support element (306), preferably alongside the lines defined by the endpoints of the arcs of the elliptical segments and parallel to the vertical dimension of the car seat.

In certain embodiments the central support element (306) is different from the flanking support elements (308), as depicted in Figures 3B and 3C. In certain embodiments, as depicted in Figure 3B, the height of each elliptical segment horizontal cross-section (114) of the support element (306, 308) is between about 5 mm and 3 cm. In certain embodiments, the length of the chord of each elliptical segment horizontal cross-section (302) of the flanking support element (306) is smaller than or equal to the length of the chord (304) of the central support element (308). Preferably, the length of the chord of the elliptical segment horizontal cross-section (304) of the central support element (306) is between about 6 cm and 12 cm, and wherein the length of the chord of the elliptical segment horizontal cross-section (302) of flanking support elements (308) is between about 2 cm and 6 cm. In certain embodiments, as depicted in Figure 3C, the height of each elliptical segment horizontal cross-section (114) of the support element (306, 308) is between about 5 mm and 3 cm. In certain embodiments, the length of the chord of each elliptical segment horizontal cross-section (302) of the flanking support element (306) is larger than the length of the chord (304) of the central support element (308). Preferably, the length of the chord of the elliptical segment cross-section (304) of the central support element (306) is between about 2 cm and 6 cm, and wherein the length of the chord of the elliptical segment horizontal cross-section (302) of the flanking support elements (308) is between about 6 cm and 12 cm. Preferably, the elliptical segment horizontal cross-sections of the support elements (306, 308) have a circular segment shape.

However, this is not to be construed as limiting and any cross-section of the support element (306, 308) that is substantially flat on the side facing the framework, and that is curvilinear and convex on the side facing away from the back of a seat, falls within the scope of the present invention. In such an embodiment, height of the elliptical segment horizontal cross-section (114) of the support element (306, 308) can be more generally referred to as the maximum length of the dimension of the horizontal cross section of the support element within the plane substantially perpendicular to the vertical dimension of the car seat, and represented by X - X' axis in Figure 3A, alongside the axis perpendicular to the backrest of a car seat (102). Further in such an embodiment, the chord of the elliptical segment horizontal cross-section (302, 304) of the support element (306, 308) can be more generally referred to as the maximum length of the dimension of the horizontal cross section of the support element within the plane substantially perpendicular to the vertical dimension of the car seat, and represented by X - X' axis in Figure 3A, alongside the axis parallel to the backrest of a car seat (102). In this embodiment, the two flanking support elements (308) are attached to the central support element (306), preferably alongside lines parallel to the vertical dimension of the car seat.

It is further conceivable that in certain embodiments of the present invention, the vertical support cushion (106) of the present invention may contain more than three support elements (110), which may have the same horizontal cross-section or a different horizontal cross section. Preferably, the vertical support cushion is between about 30 cm and 60 cm long along its vertical dimension (108). Each support element (110) has a horizontal cross-section of substantially an elliptic segment. The support elements (110) are attached to the framework in such a way that convex sides of the said support elements are facing away from the backrest of the seat, and the flat side of the said support element (110) is facing the framework. The support elements (110) are attached to one or two of their neighbor support elements, preferably alongside the lines parallel to the vertical dimension of the car seat. In certain embodiments, the height of each elliptical segment horizontal cross-section (114) of the support element (110) is between about 5 mm and 3 cm. In certain embodiments the length of the chord of the elliptical segment horizontal cross-section (112) of the support element (110) is between about 2 cm and 12 cm, preferably between about 2 cm and 6 cm. In certain embodiments the length of the chord of the elliptical segment horizontal cross-section (112) of the support element (110) is between about 2 cm and 12 cm, preferably between about 6 cm and 12 cm. Different support elements may have the same or different dimensions. Preferably, the elliptical segment horizontal cross-sections of the support elements (110) have a circular segment shape.

However, this is not to be construed as limiting and any cross-section of the support element (110) that is substantially flat on the side facing the framework, and that is curvilinear and convex on the side facing away from the back of a seat, falls within the scope of the present invention. In such an embodiment, height of the elliptical segment horizontal cross-section (114) of the support element (110) can be more generally referred to as the maximum length of the dimension of the horizontal cross section of the support element within the plane substantially perpendicular to the vertical dimension of the car seat, alongside the axis perpendicular to the backrest of a car seat (102). Further in such an embodiment, the chord of the elliptical segment horizontal cross-section (112) of the support element (110) can be more generally referred to as the maximum length of the dimension of the horizontal cross section of the support element within the plane substantially perpendicular to the vertical dimension of the car seat, alongside the axis parallel to the backrest of a car seat (102). In this embodiment, the two support elements (110) are attached to each other, preferably alongside lines parallel to the vertical dimension of the car seat.

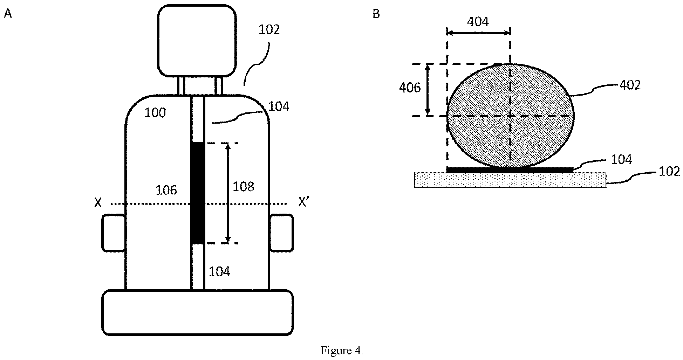

Figure 4A shows another embodiment of the present invention. A back support device (100) is attached to the back of a car seat (102) by using a framework (104). The back of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion is of substantially elliptic cylinder shape that is substantially parallel to the vertical dimension of the backrest of the seat (102). The vertical support cushion is between about 30 cm and 60 cm long along its vertical dimension (108).

Figure 4B presents a horizontal cross section of the back support device (100) of Figure 4A, in particular of the vertical support cushion (106) and the framework (104) as mounted to the back of a car seat (102), alongside the plane substantially perpendicular to the vertical dimension of the car seat, and represented by X - X' axis in Figure 4A. The plane defined by X - X' axis in Figure 4A is substantially perpendicular to the vertical dimension of the backrest of the seat (102) and may intersect the vertical support cushion (106) anywhere alongside its vertical dimension (108). It is thus herewith understood that the horizontal cross-section of the support element (402) is substantially identical alongside its vertical dimension (108) and is of elliptical shape aligned so that the semi-major axis of the elliptic cross-section of the support element (402) is substantially aligned with the horizontal dimension of the backrest of the car seat (102).

In this embodiment, the semi-major axis of the elliptic horizontal cross-section of the vertical support cushion is between about 3 cm and 7 cm. Further in this embodiment, the semi-minor axis of the elliptic horizontal cross-section of the vertical support cushion is between about 5 mm and 3 cm.

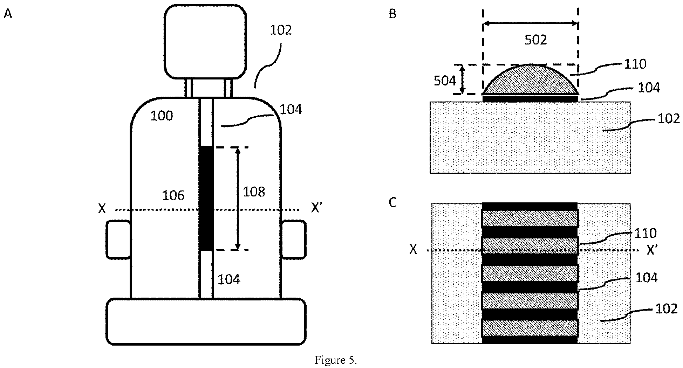

Figure 5A shows another embodiment of the present invention. A back support device (100) is attached to the back of a car seat (102) by using a framework (104) The back of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion (106) comprises a plurality of support elements that are substantially perpendicular to the vertical dimension of the vertical support cushion (108) and substantially parallel to the backrest of the car seat (102), as shown in Figure 6C.

Figure 5B presents a horizontal cross section of the back support device (100) of Figure 5A, in particular of the vertical support cushion (106) comprising the support elements (110) and the framework (104) as mounted to the back of a car seat (102), alongside the plane substantially perpendicular to the vertical dimension of the car seat, and represented by X - X' axis in Figure 5A. The plane defined by X - X' axis in Figure 5A is substantially perpendicular to the vertical dimension of the backrest of the seat (102) and intersects the vertical support cushion (106) at any one of the support elements (110). As shown in Figure 5B, each support element (110) has preferably a horizontal cross-section of substantially an elliptical segment, preferably of an elliptical segment, wherein convex side of the each support element is facing away from the backrest of the seat. In certain embodiments, the height of each of the support elements (504) is between 2 mm and 20 mm. In certain embodiments of the present invention, the horizontal dimension of the vertical support cushion (502) of the present invention as defined herein is between 3 cm and 12 cm, and the vertical dimension of the vertical support cushion (108) is between 10 cm and 50 cm. In preferred embodiments of the present invention, the support elements are filled with air, water, silicon, sand or foam (including silicon foam). Preferably, the support elements are distributed along the vertical dimension (108) of the vertical support cushion (106), preferably as shown in Figure 5C. Preferably distances between neighboring support elements are substantially equal.

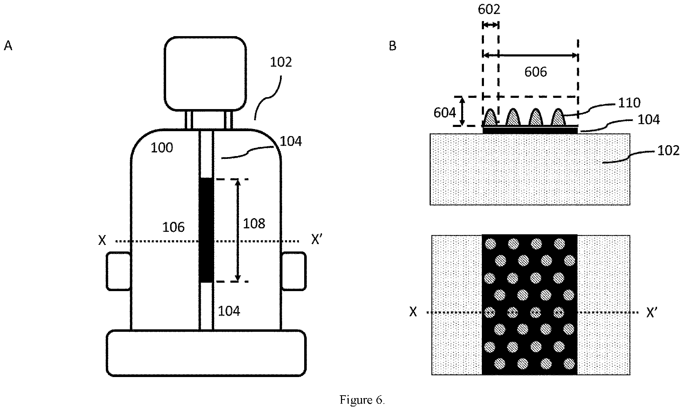

Figure 6A shows another embodiment of the present invention. The back support device (100) is attached to the backrest of a car seat (102) by using a framework (104) The backrest of the car seat (102) is used only as an example and is not to be construed as limiting herein. The back support device (100) may also be attached to a seat, an office seat, a lounge seat, and so forth. The back support device further comprises a vertical support cushion (106). The vertical support cushion can be manufactured as described herein. In this embodiment, the vertical support cushion (106) comprises a plurality of support elements, each support element having substantially the convex side facing away from the backrest of the car seat. The plurality of support elements are distributed across the whole surface of the vertical support cushion, preferably as shown in Figure 6C. Preferably, the support elements are organized in rows parallel to the horizontal dimension of the vertical support cushion. The number of support elements in each row is not limited, preferably each row comprises 2, 3, 4, 5 or 6 support elements. Further preferably, each of the rows is characterized by the same number of the support elements. Further preferably, the corresponding support elements of every second row are placed substantially on the same axis parallel to the vertical dimension of the vertical support cushion. Further preferably, distance between neighboring support elements is substantially the same. An exemplary arrangement of the support elements is shown in Figure 6. In certain embodiments of the present invention, the horizontal dimension of the vertical support cushion of the present invention as defined herein is between 3 cm and 12 cm (606), and the vertical dimension of the vertical support cushion (108) is between 10 cm and 50 cm.

Figure 6B presents a horizontal cross section of the back support device (100) of Figure 6A, in particular of the vertical support cushion (106) comprising the support elements (110) and the framework (104) as mounted to the back of a car seat (102) , alongside the plane substantially perpendicular to the vertical dimension of the car seat, and represented by X - X' axis in Figure 6A. The plane defined by X - X' axis in Figure 6A is substantially perpendicular to the vertical dimension of the backrest of the seat (102) and intersects the vertical support cushion (106) at any one of the support elements (110), preferably intersects the entire row of the support elements, preferably in a way defining the largest cross section of each support element. As depicted in Figure 6B, the support element(s) (110) take substantially the form of a plurality of the support elements, each support element having substantially the convex side facing away from the backrest of the car seat. Preferably, in the embodiment described herein have a horizontal cross-section of substantially an elliptical segment, wherein convex sides of the said support elements are facing away from the backrest of the seat. Further preferably, each support element is characterized by a cross-section substantially parallel to a vertical support cushion, or substantially parallel to the backrest of the car seat, substantially taking the form of an ellipse, preferably taking a form of a circle. Preferably the support element(s) as disclosed herein are filled with air, water, silicon, sand or foam (including silicon foam). Each support element is characterized by a dimension alongside the X-X' axis as shown in Figure 6A at the contact with the vertical support cushion (602) of between 2mm and 20 mm, and height (604) of between 3 mm and 25 mm.

### Brief description of Figures

Figure 1 shows an embodiment of the present invention, wherein the vertical support cushion comprises one support element.
Figure 2 shows an embodiment of the present invention, wherein the vertical support cushion comprises two support elements.
Figure 3 shows an embodiment of the present invention, wherein the vertical support cushion comprises three support elements.
Figure 4 shows an embodiment of the present invention, wherein the vertical support cushion comprises one support element of cylindrical shape.
Figure 5 shows an embodiment of the present invention, wherein the vertical support cushion (106) comprises a plurality of support elements that are substantially perpendicular to the vertical dimension of the vertical support cushion (108) and substantially parallel to the backrest of the seat (102).
Figure 6 shows an embodiment of the present invention, wherein the vertical support cushion (106) comprises a plurality of support elements, wherein the plurality of support elements are distributed across the whole surface of the vertical support cushion, as shown in Figure 6C. Preferably, the support elements are organized in rows parallel to the horizontal dimension of the vertical support cushion.
Figure 7 shows different forms of framework, beyond those shown in Figures 1 to 4.

Various modifications and variations of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in the relevant fields are intended to be covered by the present invention.

## Claims

1. A back support device (100), the device comprising:
a framework (104) configured for attachment to the backrest of a seat; and
a vertical support cushion (106);
wherein the vertical support cushion (106) is attached to the framework (104);
wherein the vertical support cushion (106) comprises one or more support element(s) (110) substantially parallel to the vertical dimension of the backrest of the seat, said support element(s) (110) having a horizontal cross-section of substantially an elliptical segment;
wherein convex sides of the said support elements (110) are facing away from the backrest of the seat;
and if there is more than one support element (110), wherein each support element is attached to one or two of neighboring support elements.

2. The back support device (100) of claim 1, wherein the vertical support cushion (106) is filled with silicon and/or liquid material
and/or
wherein the vertical support cushion (106) is covered with fabric, leather and/or silk.

3. The back support device (100) of claim 1 or 2, wherein the vertical support cushion (106) is between about 30 cm and 60 cm long along its vertical dimension (108).

4. The back support device (100) of any one of claims 1 to 3, wherein the height of the elliptical segment horizontal cross-section (114) of each support element (110) is between about 5 mm and 3 cm.

5. The back support device (100) of any one of claims 1 to 4, wherein the vertical support cushion (106) comprises one support element (110).

6. The back support device (100) of any one of claims 1 to 4, wherein the vertical support cushion (106) comprises two support elements (110).

7. The back support device (100) of claim 5 or 6, wherein the length of the chord of the elliptical segment horizontal cross-section (112) of each support element (110) is between about 6 cm and 14 cm.

8. The back support device (100) of any one of claims 1 to 4, wherein the vertical support cushion (106) comprises three support elements (110): central support element surrounded by two flanking support elements.

9. The back support device (100) of claim 8, wherein the length of the chord of the elliptical segment horizontal cross-section of the central support element (304) is between about 6 cm and 12 cm, and wherein the length of the chord of the elliptical segment horizontal cross-section of flanking support elements (302) is between about 2 cm and 6 cm.

10. The back support device (100) of claim 8, wherein the length of the chord of the elliptical segment cross-section of the central support element (304) is between about 2 cm and 6 cm, and wherein the length of the chord of the elliptical segment horizontal cross-section of the flanking support elements (302) is between about 6 cm and 12 cm.

11. A back support device (100), the device comprising:
a framework (104) configured for attachment to the backrest of a car seat; and
a vertical support cushion (106);
wherein the vertical support cushion (106) is attached to the framework (104);
wherein the vertical support cushion (106) is of substantially elliptic cylinder shape and is substantially parallel to the vertical dimension of the backrest of the car seat; and
wherein the semi-major axis of the elliptic cross-section of the vertical support cushion (404) is substantially aligned with the horizontal dimension of the backrest of the car seat.

12. The back support device (100) of claim 11, wherein the vertical support cushion (106) is filled with silicon and/or liquid material,
and/or
wherein the vertical support cushion (106) is covered with fabric, leather and/or silk.

13. The back support device (100) of claim 11 or 12, wherein the vertical support cushion (106) is between about 30 and 60 cm long along its vertical dimension (108).

14. The back support device (100) of any one of claims 11 to 13, wherein the semi-major axis of the elliptic horizontal cross-section of the vertical support cushion (404) is between about 3 cm and 7 cm.

15. The back support device (100) of any one of claims 11 to 14, wherein the semi-minor axis of the elliptic horizontal cross-section of the vertical support cushion (406) is between about 5 mm and 3 cm.
